Europäisches Patentamt

**European Patent Office**

**Office européen des brevets**

(11) Publication number: **0 049 598**
A1

## (12) EUROPEAN PATENT APPLICATION

(21) Application number: **81304523.4**

(22) Date of filing: **30.09.81**

(51) Int. Cl.³: **F 16 N 27/00**
**F 16 N 7/30, B 65 G 45/02**

(30) Priority: **02.10.80 US 193016**

(43) Date of publication of application:
**14.04.82 Bulletin 82/15**

(84) Designated Contracting States:
**AT BE CH DE FR GB IT LI LU NL SE**

(71) Applicant: **FREDERICK MANUFACTURING COMPANY, INC.,**
**519 East Church Street**
**Frederick Maryland 21701(US)**

(72) Inventor: **Fitzmaurice, Joseph P.**
**P.O. Box 472 Route 2**
**Berkley Springs West Virginia 25411(US)**

(74) Representative: **Russell-Rayner, Albert Patrick**
**61 Pasture Road**
**Letchworth Hertfordshire, SG6 3LS(GB)**

(54) Apparatus for and methods of lubricating a chain.

(57) A chain is lubricated by applying discrete quantities of lubricant to interfacing portions of the chain (10) as the chain is advanced by a sprocket or bull gear. The sprocket or bull gear (11) includes indicators (42) thereon adjacent every fourth tooth (12) which indicators pass a stationary magnetic detector (41) that provides a signal each time an indicator is in proximity therewith. The signal energises normally closed solenoid valves (33a-33d) connected to a pressurized chamber (35) to release the discrete quantities of lubricant which are directed to the interfacing portions by nozzles (21-24). A continuous air stream (58,59,61) downstream of the nozzles spreads the lubricant while a continuous air stream upstream of the nozzles cleans the chain (10). In addition, an hour timer (70) is provided to operate the lubricating system periodically while a minute timer (71) is provided to interrupt operation of system after a selected number of cycles and to reset the hour timer (70) for a subsequent lubrication operation.

FIG.1

EP 0 049 598 A1

-1-

APPARATUS FOR AND METHODS OF LUBRICATING A CHAIN

BACKGROUND OF THE INVENTION

1.   Field of the Invention

This invention relates to apparatus for and methods of lubricating chains, and more particularly, this invention relates to apparatus for and methods of lubricating chains wherein lubricant is periodically applied in discreet amounts as the chain passes a lubricating station.

2.   Technical Considerations and Prior Art

There has long been a need for lubricating systems for lubricating chains wherein the lubricant is applied in a manner that prolongs the life of the chains and does not have, or contribute to, other problems associated with utilizing the chains.  This is especially the case with chains utilised for large industrial applications wherein the chains  are extremely expensive to maintain and replace, due not only to  the expense of the chain itself, but also to the down time which results when replacing or performing maintenance on the chain.  For example, in bulk mail centres chains approximately two thousand feet long are utilized.  These chains must be replaced every three years due to wear at a cost of one and a half million dollars.

-2-

In many other similar applications such as cement plants, coal and other bulk conveyors, steel mills, etc., long heavy chains are utilized. The chains must be replaced prematurely due to wear resulting from inadequate lubrication.

When lubricating a chain, as with lubricating any other mechanical device, it is only necessary to lubricate interfacing portions or those portions which both abut one another and move relative to one another. Lubricating other portions of a chain merely wastes lubricant and creates additional problems such as trapping dust and grit. Moreover, excess lubricant drips off the chain into adjacent areas causing other problems. For example, in bulk mail centres dripping lubrication not only gets on workers and mail but also causes deterioration in adjacent mechanisms, such as polyurethane chain wheels which are pulled along by the chain. When chains are used in dusty environments such as cement mills and ore conveyors, excessive lubricant traps and suspends abrasive and corrosive dust which greatly accelerates chain wear. In the food industry, food can be contaminated by lubricant dripping from mechanisms such as chains. From these considerations it is apparent that improvements are needed in the art of lubricating chains.

The aforementioned problems are recognised in the art and numerous attempts have been made to correct or mitigate these problems. One approach, suggested by U.S. Patent 3,785,456, is to lubricate the chain periodically during a cycle or two of the chain. However, in U.S. Patent 3,785,456, the lubricant is projected onto the chain in an air stream so that some of the lubricant necessarily misses the chain and is dispersed into the atmosphere. While most lubricants are not highly toxic when injested in small doses, airborne lubricant mist can present a long term health hazard especially in combination with the many other substances which inhabit industrial environments. Accordingly, it is desirable to avoid spraying lubricant whenever possible. Moreover, sprayed or aerosol type lubricants necessarily pick up airborne dust particles during their application, which particles add to deterioration of the chain.

Another approach to lubricating chains is suggested by U.S. Patent 2,593,841 wherein the lubricant is applied in discreet "squirts" or "shots". If a relatively large chain is being lubricated, then the shots of lubricant dispensed by the apparatus of U.S. Patent 2,593,841 will probably be in the form of streams in order to provide sufficient lubricant for the chain. In U.S. Patent 2,593,841, the lubricant is concentrated initially in a specific area and must run by gravity, inertia or some other phenomenon to adequately coat abutting moving parts of the chain. Accordingly, the "squirting" approach suggested by U.S. Patent 2,593,841 will not alone solve the problems set forth in the preceding paragraph.

There are numerous other patents directed to the concept of lubricating chains. The most pertinent of these references are listed and discussed in the accompanying prior art statement.

## Summary of the Invention

In view of the aforementioned considerations, and other considerations, it is a feature of the instant invention to provide new and improved apparatus for and methods of lubricating chains properly while avoiding the problems which occur when excess lubricant is applied.

-4-

In view of this feature, and other features, the instant invention contemplates methods and apparatus for lubricating a chain which is trained around a sprocket having teeth which positively engage the chain. The apparatus includes indicators fixed to the sprocket for rotating with the sprocket as the sprocket advances the chain. A detector is located adjacent to the sprocket and generates a signal upon detecting the presence of an indicator. The lubricant is stored under pressure in a container which is connected to a nozzle by a normally closed valve. The valve is connected to the detector and opens upon receiving a signal from the detector. An air nozzle is located downstream of the lubricating nozzle and applies a stream of air to spread the lubricant dispensed from the lubricating nozzle.

In addition, the instant invention contemplates utilizing an air stream upstream of the lubricating nozzle for cleaning the chain prior to lubricating it. Furthermore, timers are connected to the apparatus for operating the apparatus periodically so that lubricant is only applied when needed.

The instant invention further includes methods of utilizing the aforementioned apparatus wherein the chain is lubricated in accordance with the functions of the apparatus.

Brief Description of the Drawings

Figure 1 is a side view of the apparatus in accordance with the instant invention showing the apparatus positioned to lubricate the chain.

Figure 2 is a top view of the apparatus of Figure 1 showing the apparatus juxtaposed with a bull gear which is used to advance the chain.

Figure 3 is a diagram schematically showing the electrical, pneumatic and hydraulic components of the lubricating apparatus of Figures 1 and 2.

Figure 4 is a front view of a preferred arrangement of some of the components shown as Figures 1 through 3.

## Description of the Preferred Embodiment

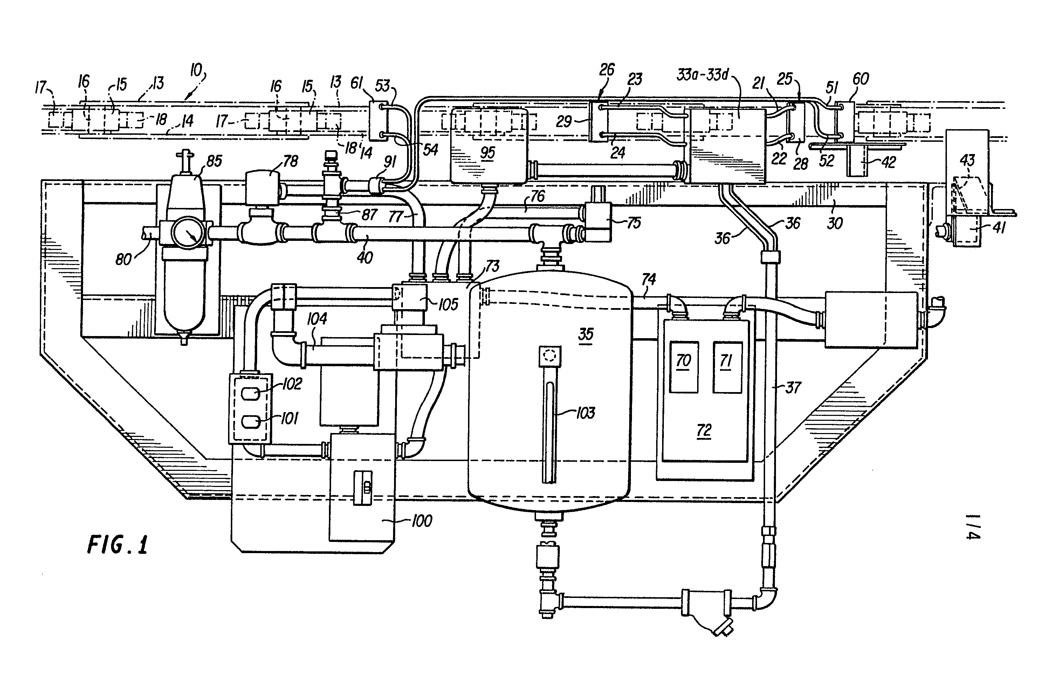

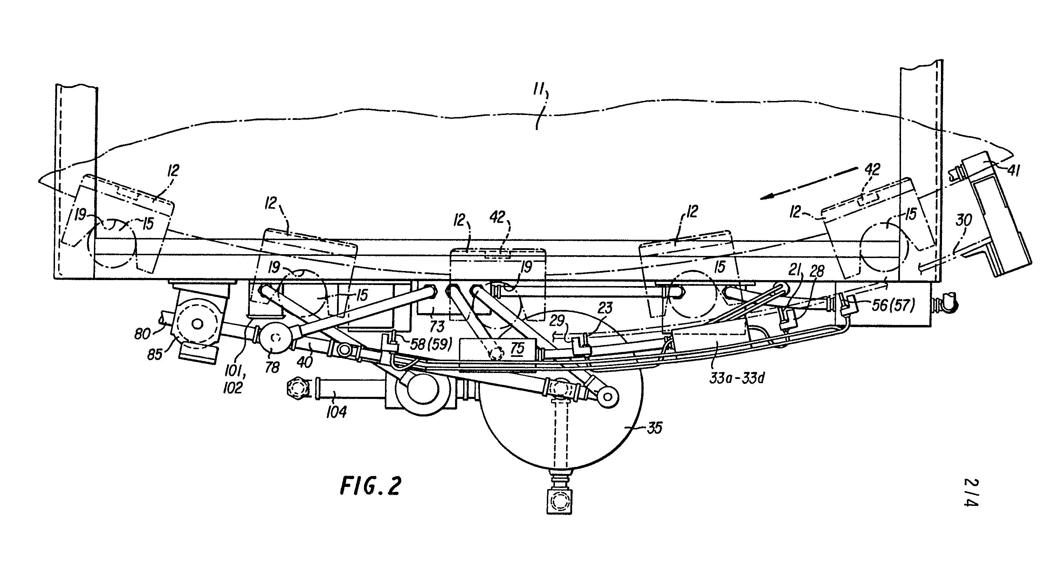

Referring now to Figures 1 and 2, there is shown a chain, designated generally by the numeral 10, which chain is driven by a sprocket or bull gear 11 having a series of spaced teeth 12 thereon which engage the chain 10. In the disclosed embodiment, chain 10 is configured with first and second links 13 and 14, respectively, which are held in spaced relation by a roller 15 which surrounds a pin 16 that connects the links together. Links 13a and 14a are outside links while links 13b and 14b are inside links. Each tooth 12 is U-shaped with a leading leg 17 and trailing leg 18. The legs 17 and 18 fit between the first and second links 13 and 14 with the spacer 15 nested in the bight 19 between the legs 17 and 18. In accordance with one application for the invention the chain 10 is approximately two thousand feet long and bull gear 11 is approximately nine feet in diameter.

The problem confronting the applicant is to properly lubricate interfacing components of the chain, i.e. the abutting surfaces of links 13 and 14, the pin 16 and spacer 15. There is no need for lubricant to be applied to the links 13 and 14 intermediate their ends because this lubricant would be wasted and would merely accumulate to create additional problems.

The lubricant is applied by four nozzles 21,22, 23 and 24. Nozzles 21 and 22 are located at a downstream station, designated generally by the numeral 25, while the nozzles 23 and 24 are located at an upstream station, designated generally by the numeral 26. The stations 25 and 26 are juxtaposed with the periphery of the bull gear 11 rather than along the free length of the chain 10 because the teeth 12 of the drill gear properly locate the chain with respect to the nozzles 21-24 while the gear stablises the chain. Accordingly, lubricant can be applied by the nozzles 21-24 with great accuracy. The nozzles 21 and 22 are rigidly held by a mounting plate 28, while the nozzles 23 and 24 are rigidly held by a mounting plate 29. The mounting plates 28 and 29 are secured to a base 30 which supports the components of the system in fixed relation with respect to the bull gear 11 and chain 10. Each of the nozzles 21-24 supply simultaneously a metered shot of lubricant to the interfaced areas of the chain 10 as the chain passes stations 25 and 26. The stations 25 and 26 are spaced apart a distance equal to the pitch of the chain which is the distance between the centres of pins 16. Nozzles 21 and 23 lubricate the interfacing portion of the joints connecting first links 13 and 13b while the nozzles 22 and 24 lubricate the interfacing portions of the joints connecting second links 14 and 14b.

The nozzles 21-24 are each connected to one of four fast cycling, normally closed, solenoid operated valves 33a-33d. When the valves 33a-33d are opened, lubricant which is pressurised in a tank 35 connected to the valves is dispensed. As will be further explained hereinafter, the tank 35 is pressurised by regulated shop air which is delivered over line 40.

The solenoid operated valves 33a-33d are opened by operation of a detector 41 which senses the presence of indicators 42 that project from the bull gear 11. The indicators 42 are positioned adjacent to each second tooth 12. Since two link interfaces are lubricated simultaneously with each operation of the valves 33a-33d, every link interface will be lubricated during a single cycle of the chain, if the valve 33 is opened with the passage of every second tooth.

Preferably, the detector 41 includes a magnetic switch 43 and the indicators 42 are iron or steel lugs which cause the switch to close when in proximity with the switch. As long as the lugs 42 are in the proximity of magnetic switch 43, the switch will remain closed which will keep the normally closed, solenoid-operated valves 33a-33d open. When the indicator lug 42 moves out of proximity with the magnetic switch 43, the switch opens which de-energises the normally closed solenoid-operated valves 33a-33d allowing the valves to close and thereby interrupting flow of lubricant therethrough. As the bull gear 11 rotates, the indicator lugs 42 move relatively rapidly past the magnetic switch 43 so that lubricant is dispensed through nozzles 21-24 in the aforementioned discrete shots which resemble single drops rather than streams. In one application of the invention, the bull gear rotates the lugs 42 past the sensor at a speed of three hundred twenty feet per minute. By locating the lugs 42 adjacent every second tooth 12, the solenoid operated valves 33a-33d have a chance to completely close and completely open with the dwell time between each operation. The proper amount of lubricant is dispensed by controlling the pressure in the tank 35 and the bore diameter of the nozzles 21-24 so that each passage of a lug 42 will release a sufficient amount of lubricant without dispensing excess lubricant.

The compressed air delivered over line 40 which is used to pressurise tank 35 is also applied via lines 51, 52, 53 and 54 to the chain 10 through nozzles 56, 57, 58 and 59, respectively. The nozzles 56 and 58 impinge a continuous stream of air on the first links 13a and 13b, while the nozzles 57 and 59 impinge a continuous stream of air on the second links 14a and 14b. The nozzles 56 and 57 are secured to a mounting plate 60 positioned upstream of lubricating station 25 and direct a continuous stream of air onto the links 13a and 13b and 14a and 14b in order to remove dust which has settled on the links so that the dust will not be coated over by lubricant subsequently dispensed at stations 25 and 26. Dust and debris in the lubricant can over a period of time cause abrasion and erosion of interfacing surfaces of the chain. This is especially the case when only a small amount of lubricant is applied.

The nozzles 58 and 59 which are connected to the air lines 53 and 54 are positioned in a mounting plate 61 which is positioned downstream of lubricating station 26. The continuous streams of air from nozzles 58 and 59 spread the lubricant previously dispensed at stations 25 and 26 between the interfacing surfaces of links 13a and 13b, and 14a and 14b, the roller 15 and the pin 16. Air is dispensed through nozzles 56-59 continuously so long as the lubricating cycle operates. When the cycle stops then the continuous streams of air cease.

In accordance with the principles of the instant invention, the lubricating cycle is started periodically after the chain 10 has run for a preselected number of hours. The lubrication is then performed for a selected number of cycles of the chain, perhaps two, to make sure that each joint in the chain 10 receives lubrication. Thereafter, the lubrication system shuts down until the next lubricating cycle. Programming of the system is accomplished by using an hour timer 70 and a minute timer 71 located in a timing box 72. The hour timer 70 is an elapsed time clock which sets the period of lubrication, while the minute timer 71 determines the lubricating cycle. For example, the chain 10 may require lubrication every two hundred hours of operation which is determined by the hour timer 70. The cycle may be determined two revolutions of the chain 10 which, for example, may require fifteen minutes. After the chain 10 is cycled fifteen minutes, the minute timer 71 stops operation of the lubricating system. The hour timer 70 retains its elapsed time and is started only when the chain is running. The minute timer 71 starts the lubrication operation only when the hour timer is operating and resets the hour timer for a subsequent cycle after each lubrication cycle is completed. Accordingly, lubrication of the chain is based on the actual time that the chain 10 is running.

Considering operation of the apparatus in more detail, starting motion of the chain 10 starts the hour timer 70. Once the hour timer 70 reaches the end of its programmed period, it starts the minute timer 71 and inititates operation of the lubricating system generally by signalling a controller 73 over line 74. The main junction box 73 supplies power over line 76 to close an air relief valve 75 and thereby closes the system. The main junction box 73 also applies power over line 77 to open an air input valve 78 which lets compressed air into the system via a shop air line 80. A regulator 85 limits the air pressure applied over line 80 to an appropriate level, for example, 12-15 psi. This 12-15 psi pressure is applied over the line 40 to the lubricant storage tank 35. In addition, the pressure is applied via an air line 87 through a manifold 91 to lines 51, 52, 53 and 54 so as to provide a continuous supply of air for the continuous air streams applied upstream and downstream of the lubricating stations 25 and 26 during operation of the chain.

Simultaneously with energization of valves 75 and 78, the timer 70 causes energization of the detector 41 which includes the magnetic switch 43. Upon closing switch 43 due to proximity of the lug 42, 115 volt electrical power is applied to the four, fast cycling solenoid valves 33a-33d. This causes the valves 33a-33d then to open simultaneously allowing passage of lubricant through lines 21, 22, 23 and 24. As soon as the indicator lug 42 moves out of proximity with the magnetic switch 43 in detector 41, the 115 volt power is interrupted which de-energizes the solenoid valves 33a-33d, allowing the valves to close and interrupting flow of the lubricant. In this way each application of lubricant is metered to provide a single "shot" or "drop" of lubricant. For convenient operation, the apparatus is equipped with manual switch 100 which, when closed, provides line current to the system which is distributed by junction box 73 to various components of the system at the proper time. An indicating light 102 turns on when the system is operating and tank 35 is pressurized via pressure in line 40. A sight glass 103 is provided to indicate the level of lubricant in the tank 35 and a fill line 104 is connected to the side of the tank. A normally open solenoid valve 105 is positioned in the fill line 104 to close the line when the system is energized. A switch 107 is provided to open the solenoid 105 when the system is not operating (light 102 off) so that the tank 35 can be topped with lubricant.

-11-

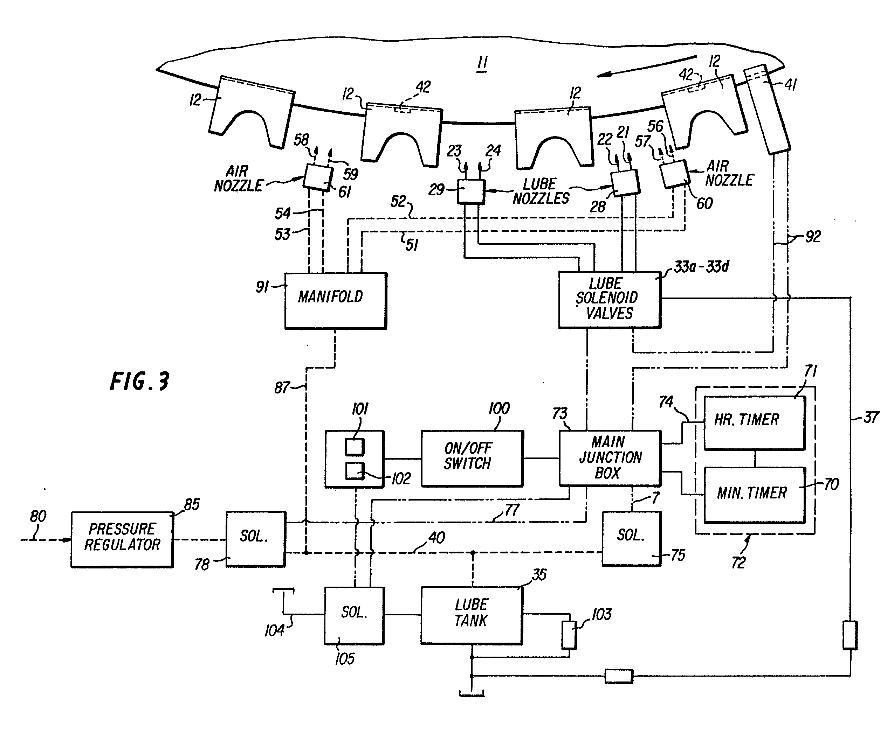

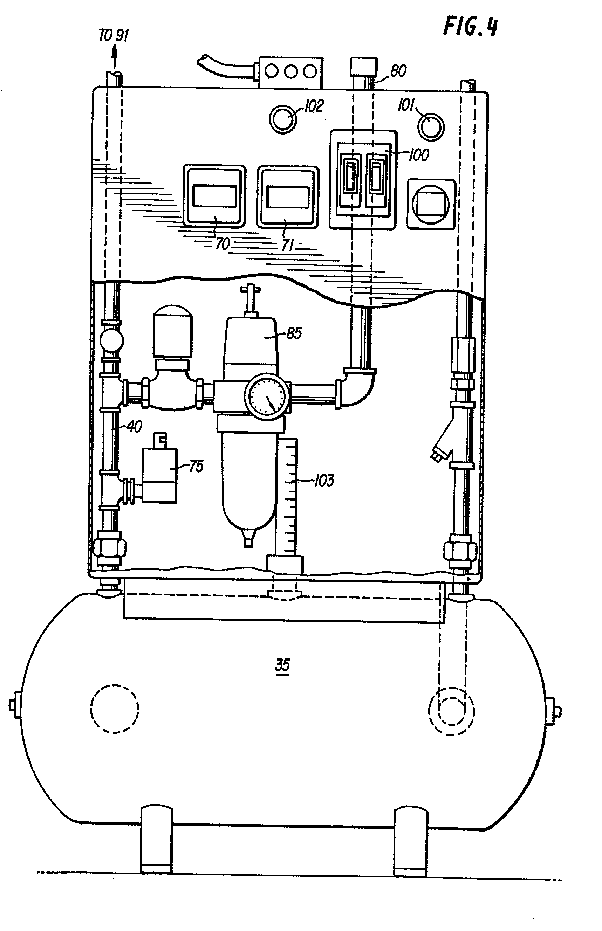

Figure 4 illustrates a commercialised packaging of the components shown in Figures 1-3. In the arrangement of Figure 4, the same numerals are used to identify components functionally similar to the components in Figures 1-3.

The foregoing examples and embodiments are merely illustrative of the invention, which invention is to be limited only by the following claims:

-12-

CLAIMS

1.   Apparatus for lubricating interfacing portions of relatively moving components of a chain, wherein the chain is trained around a sprocket having teeth which positively engage the chain,  the apparatus being characterised by,

a plurality of indicators (42) fixed to  the sprocket or bull gear 11 at equal circumferential intervals  for indicating rotation of the sprocket (11) and advancement of the chain (10) by following a prescribed path past fixed stations as the sprocket rotates;

detecting means (41) located at the fixed station and aligned with  the path prescribed by the indicators (42) for  detecting proximity of individual indicators;

means connected to  the  detecting means for generating a signal upon detection of an indicator (42);

means (35) for storing and pressurising the lubricant;

lubricant releasing means (33a-33d) connected to the signal generating means for releasing a portion of the pressurised lubricant upon generation of a signal;

nozzle means (21-24) aligned with the interfacing portions of  the chain (10) and connected to the lubricant releasing means (33a-33d) for directing the portion of lubricant onto the interfacing portions; and

means (61) downstream of the nozzle means for impinging a stream of gas onto the interfacing portions to spread the lubricant thereover.

2.   The apparatus of Claim 1 characterised in that the chain has first and second trains of links separated by spacers and in that the nozzle means comprise at least a pair of nozzles 21,22; one of which is aligned with each train.

3. The apparatus of claim 2 characterised in that the indicators 42 are positioned in association with every second tooth (12) on the sprocket (11) and in that there is a second pair of nozzles (23,24) displaced from the first pair (21,22) by a distance equal to the pitch of the chain (10) and sprocket (11) whereby two pairs of successive interfacing portions of the chain are lubricated simultaneously.

4. The apparatus of Claim 1 and further characterised by gas applying means 51,52 upstream of the nozzle means 21,22 for applying at least one stream of gas to clean the interfacing portions prior to applying lubricant.

5. The apparatus of Claim 4 and further characterised by means 91 for applying the gas continuously.

6. The apparatus of Claims 1,2,3,4 or 5 and further characterised by means for energising the apparatus periodically which means comprises:
an elapsed time clock (72) for activating the energising means after a selected period of time, and means for terminating operation of the energising means after one or more cycles of the chain (10) past the lubricating nozzles (21-24).

7. A method of lubricating interfacing portions of relatively moving components of a chain trained around a sprocket having teeth which mesh with the chain, the method being characterised by the steps of:
generating a signal each time a selected number of teeth pass a fixed station;

-14-

releasing a discrete portion of lubricant at a lubrication station each time a signal is generated; directing the discrete portion of lubricant onto interfacing portions of the chain adjacent the lubrication station; and spreading the lubricant with a stream of gas applied downstream of the lubricating station.

8. The method of Claim 7 and further characterised by the steps of: cleaning the chain with a stream of air upstream of the lubricating station.

9. The method of Claim 7 characterised in that the chain includes first and second trains of links separated by spacers and in that the method further comprises lubricating simultaneously each train of links with separate discrete portions.

10. The method of Claim 9 characterised in that the selected number of teeth is four and wherein the discrete portions are applied simultaneously at locations spaced apart by a distance equal to the pitch of the sprocket teeth and chain.

FIG.1

1/4

0049598

FIG.2

2/4

0049598

FIG.3

0049598

FIG.4

European Patent Office

**EUROPEAN SEARCH REPORT**

Application number

EP 81 30 4523

| Category | DOCUMENTS CONSIDERED TO BE RELEVANT | | CLASSIFICATION OF THE APPLICATION (Int Cl ) |
|---|---|---|---|
| | Citation of document with indication, where appropriate, of relevant passages | Relevant to claim | |
| DX | US - A - 2 593 841 (BURCHSTED) <br> * Column 1, lines 1-19; column 1, line 37 to column 2, line 40; figures 1,3 * <br> -- | 1,7 | F 16 N 27/00 <br> 7/30 <br> B 65 G 45/02 |
| | GB - A - 899 715 (KING) <br> * Page 1, line 1 to page 2, line 35; lines 75-84; figures * <br> -- | 1,3,4, 7,8,10 | |
| | DE - B - 1 031 592 (HUTTER) <br> * Column 1, line 51 to column 3, line 2; figures 1,2 * <br> -- | 1,3,4, 7,8,10 | TECHNICAL FIELDS SEARCHED (Int. Cl.³) |
| | GB - A - 2 032 012 (DE LIMON FLUHME) <br> * Page 1, lines 54-67; lines 102-116; figures 1,4 * <br> -- | 1,3,7, 10 | F 16 H <br> B 65 G <br> F 16 N |
| | GB - A - 613 221 (TECALEMIT) <br> * Page 1, lines 10-15; page 3, lines 100-116; figures 1,2 * <br> -- | 2,9 | |
| D | US - A - 3 785 456 (ELK CRAFT) <br> * Column 1, lines 29-35; column 2, lines 9-35; column 3, lines 1-18; line 46 to column 4, line 68; figures 1,2 * <br> -- | 6,7 | |
| | US - A - 3 762 504 (BANYAS) <br> * Column 1, lines 8-21; column 4, lines 41-60; column 7, lines 17-31; figure 4 * <br> ----- | 1,3,10 | |

CATEGORY OF CITED DOCUMENTS

X: particularly relevant
A: technological background
O: non-written disclosure
P: intermediate document
T: theory or principle underlying the invention
E conflicting application
D document cited in the application
L citation for other reasons

&. member of the same patent family, corresponding document

The present search report has been drawn up for all claims

| Place of search | Date of completion of the search | Examiner |
|---|---|---|
| The Hague | 06-01-1982 | KOOIJMAN |

EPO Form 1503.1  06.78